# EUROPÄISCHE PATENTSCHRIFT

(11) **EP 1 762 748 B1**
(45) Veröffentlichungstag und Bekanntmachung des Hinweises auf die Patenterteilung: **15.12.2010**
(21) Anmeldenummer: 06015850.8
(22) Anmeldetag: 29.07.2006
(51) Int. Cl.: F16F 13/14, F16F 13/28

(54) **Schaltbares hydraulisches Lager**
Switchable hydraulic mount
Support commutable à fluide

(30) Priorität: 09.09.2005 DE 102005043204
(43) Veröffentlichungstag der Anmeldung: 14.03.2007
(73) Patentinhaber: AUDI AG, 85045 Ingolstadt (DE)
(72) Erfinder: Ehlbeck, Dieter, 23714 Bad Malente (DE); Pelz, Peter, 22769 Hamburg (DE); Kardoes, Hilrich, 21423 Winsen/Luhe (DE); Conrad, Thomas, 91757 Treuchtlingen (DE); Schmied, Benno, 67071 Ludwigshafen (DE)

(56) Entgegenhaltungen:
- WO-A-2005/059399
- DE-A1- 4 015 528
- DE-A1- 10 359 340
- DE-A1-102004 006 582

## Beschreibung

### Technisches Gebiet

Die Erfindung betrifft ein schaltbares hydraulisches Lager, insbesondere Fahrwerkslager, aus einem wenigstens teilweise hohlen Lagerkern, einer äußeren Lagerhülse und einer dazwischen angeordneten Feder aus einem Elastomer sowie in Umfangsrichtung untergebrachten, von der Feder in axialer Richtung getrennten hydraulischen Arbeitskammern, die über einen oder mehrere Strömungskanäle miteinander verbunden sind, (siehe z.B. WO 2005/059399 A1, dem Oberbegriff entsprechend).

Schaltbare hydraulische Lager werden für verschiedene Zwecke eingesetzt. Ein weit verbreitetes Anwendungsgebiet für solche Lager sind jedoch Fahrwerkslager, welche den sich widersprechenden Anforderungen an Fahrdynamik und Akustik zu erfüllen haben. Dabei wird angestrebt, dass je nach Fahrbetrieb die statische Steifigkeit und die dynamische Steifigkeit verändert werden kann. Bei Anwendung eines Lagers bei einer Fahrschemellagerung ist beispielsweise die statische Steifigkeit in Fahrtrichtung (X-Richtung) und in Vertikalrichtung (Z-Richtung) zu verändern. Auch ist gewünscht, dass das Lager die Anpassung der dynamischen Steifigkeit, das heißt die Dämpfung des Lagers, im Fahrbetrieb zulässt.

### Stand der Technik

Durch die DE 40 15 528 A1 ist ein Gummilager für einen Kolbenmotor bekannt geworden, bei dem zwei flüssigkeitsgefüllte Arbeitsräume vorgesehen sind, die durch elastisch aufblähbare Begrenzungswände seitlich begrenzt und durch wenigstens zwei parallel geschaltete Verbindungsöffnungen verbunden sind. Eine der Verbindungsöffnungen ist als Dämpfungsöffnung ausgebildet und durch ein Ventil willkürlich verschließbar. Die Dämpfungsöffnung ist kanalartig gestaltet und so dimensioniert, dass die darin befindliche Flüssigkeitsmasse bei Erreichen der Leerlaufdrehzahl des Kolbenmotors in eine gleichphasig mit diesem schwingende Relativbewegung einer Amplitude gelangt, die größer ist als die Amplitude der Bewegungen des Kolbenmotors multipliziert mit dem Verhältnis aus dem Verdrängungsquerschnitt der Blähfedern und dem Querschnitt der Dämpfungsöffnung. Mit einer solchen Einrichtung ist es möglich, die dynamische Steifigkeit des Lagers zu verändern.

Durch die DE 10 2004 006 582.9 ist außerdem eine Lageranordnung eines Fahrschemels mit Anbindung an den Fahrzeugaufbau bekannt geworden, bei dem die Lagerachse und die Aufnahmebohrung des Lagers in Fahrzeugquerrichtung verlaufen und die Anbindung des Lagers an den Fahrzeugaufbau über die Lagerstirnfläche erfolgt. Die Orientierung der Lagerachse ist damit in etwa horizontal in Fahrzeugquerrichtung (Y-Richtung). Bei einem solchen Lager wird eine hohe Steifigkeit in Querrichtung (Y-Richtung) und kleinere Steifigkeiten in Längs- und Hochrichtung (X- und Z-Richtung) erreicht, was ein komfortables Verhalten des Fahrzeugs ergibt.

### Darstellung der Erfindung

Der Erfindung liegt die Aufgabe zugrunde, ein Lager zu schaffen, welches die Vorteile der zum Stand der Technik geschilderten Lagerausbildungen in einem Lager vereinigt, so dass sowohl eine vorteilhafte Anordnung des Lagers am Fahrzeug als auch eine Schaltbarkeit des Lagers gegeben ist. Das Lager soll an die Fahrgegebenheiten anpassbar sein, so dass sowohl die statische Steifigkeit als auch die dynamische Steifigkeit dem Fahrbetrieb angepasst werden kann. Dieses soll in möglichst optimaler Weise durchführbar sein. Darüber hinaus soll das Lager betriebssicher und kostengünstig sein.

Die Erfindung ist durch die technischen Merkmale des unabhängigen Vorrichtungsanspruchs 1 definiert; die davon abhängigen Ansprüche geben zusätzliche Merkmale der Erfindung an.

Die Lösung der gestellten Aufgabe wird bei einem Lager der eingangs genannten Gattung erfindungsgemäß dadurch erreicht, dass in Umfangsrichtung des Lagers vier Arbeitskammern vorgesehen sind, die von der Feder in axialer Richtung getrennt sind und von denen jeweils zwei sich gegenüberliegen und über absperrbare Durchflussöffnungen miteinander verbindbar sind. Die sich gegenüberliegenden Kammern werden beim Einbau des Lagers in X-Richtung und in Z-Richtung angeordnet und sind somit für die Steifigkeit des Lagers in X-Richtung oder Z-Richtung zuständig. Die Volumina der einzelnen Arbeitskammern können dabei an die in der jeweiligen Richtung auftretenden Kräfte angepasst werden.

Eine weitere Möglichkeit der Anpassung des Lagers an die auftretenden Kräfte ist dadurch gegeben, dass die Strömungsquerschnitte in den Durchflussöffnungen größer sind als die Strömungsquerschnitte in den Strömungskanälen für die Arbeitskammern. Dieses wird erfindungsgemäß dadurch erreicht , dass die Durchflussöffnungen in der Wand des Lagerkerns angeordnet sind. Hierdurch werden besonders kurze Verbindungswege zwischen den einzelnen Arbeitskammern erreicht. Erfindungsgemäß ist für das Verschließen bzw. freigeben der Durchflussöffnungen wenigstens ein Sperrelement innerhalb des Lagerkerns vorhanden, mit dem die Durchflussöffnungen verschlossen werden können. Dabei können verdrehbare oder auch axial verschiebbare Elemente verwendet werden. Ihre Betätigung kann über Aktuatoren erfolgen, welche über entsprechende Sensoren je nach Fahrzeugzustand gesteuert werden. Als Aktuatoren kommen Elektromotore oder Elektromagnete in Frage.

Bevorzugt werden Sperrelemente verwendet, die aus einer drehbeweglich oder axial verschiebbaren Welle mit einem hohlen Innenraum bestehen, wobei die Wand des Innenraums mit den Durchflussöffnungen im Lagerkern zugeordneten Durchlässen versehen ist. Möglich sind aber auch Sperrelemente aus einer drehbeweglich oder axial verschiebbaren Stange mit daran befestigten Verschließaufsätzen, die den Durchflussöffnungen im Lagerkern zugeordnet sind.

Von Vorteil ist, wenn die Sperrelemente mit federnd gelagerten Gleiteinsätzen versehen sind. Die federnde Lagerung kann durch unterhalb des jeweiligen Gleiteinsatzes eingelegte O-Ringe erfolgen. Schließlich können die Gleiteinsätze mit einer Beschichtung aus Teflon oder Nylon versehen sein.

Eine besonders vorteilhafte Ausgestaltung der Erfindung ergibt sich dann, wenn ein weiterer Satz an Arbeitskammern durch radial ausgerichtete Blähfederwände gebildet wird und die so entstandenen Nebenkammern mit gesonderten absperrbaren Durchflussöffnungen miteinander verbunden werden können. Hierdurch kann eine besonders gute Steuerung des Steifigkeitsverhaltens des Lagers erreicht werden. Den jeweiligen Nebenkammern können gesonderte Sperrelemente zugeordnet werden.

In Fortführung dieses Gedankens können die Arbeitskammern durch einzelne nebeneinander angeordnete Bauteile gebildet sein, so dass eine modulare Bauweise für das Lager entsteht. Die Bauteile können mit auf den Lagerkern aufschiebbaren Hülsen versehen werden, wodurch ihre Montage erleichtert wird. Schließlich ist es möglich, dass die einzelnen Bauteile unterschiedlich große Arbeitskammern haben.

Bei einem Lager mit Nebenkammern werden in der Regel zwei unabhängig voneinander betätigbare Sperrelemente vorgesehen, so dass die Arbeitskammern unabhängig voneinander regelbar sind.

An der Stirnfläche des Lagers hat das Lager einen in axialer Richtung des Lagers angeordneten und mit dem Lagerkern gekoppelten Verbindungskopf mit einem umlaufenden Flansch. Zur Aufnahme von Kräften in Querrichtung (Y-Richtung) ist zwischen dem Flansch des Verbindungskopfes und einem an der Lagerhülse vorhandenen Ringflansch ein Elastomereinsatz angebracht. Dieser Elastomereinsatz kann mit Versteifungseinlagen versehen sein.

### Kurzbeschreibung der Zeichnung

Anhand der in der Zeichnung dargestellten Ausführungsbeispiele wird die Erfindung nachstehend näher erläutert.

Es zeigt
- Fig. 1: den prinzipiellen Aufbau des bevorzugten Lagers im Längsschnitt
- Fig. 2: einen Querschnitt durch das Lager gemäß der Linie A-A nach Fig. 1 und
- Fig. 3: einen Längsschnitt durch ein weiter detailliertes Lager.

### Ausführung der Erfindung

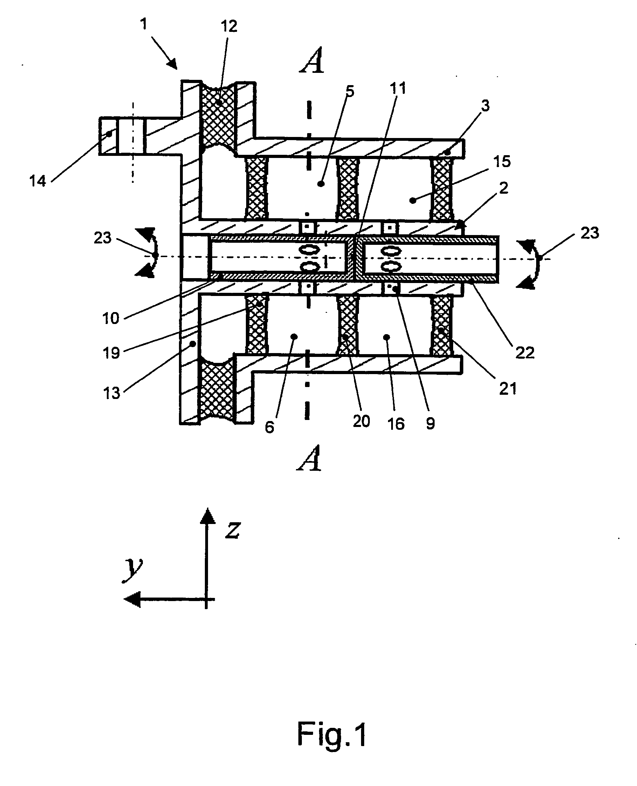

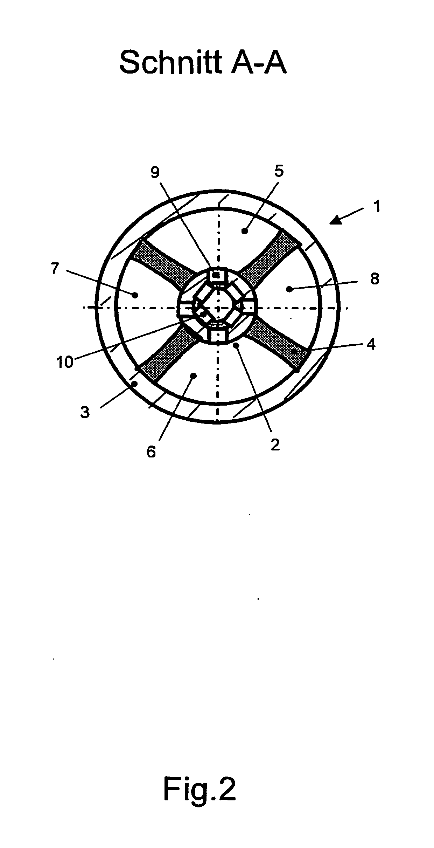

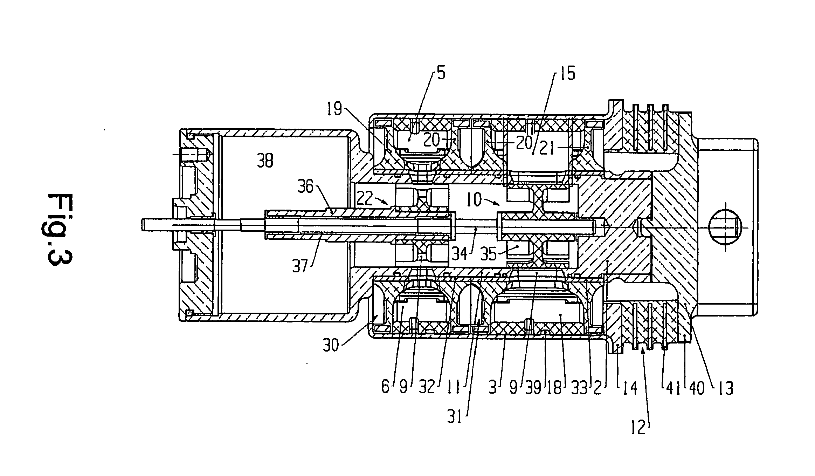

Die Fig. 1 zeigt den prinzipiellen Aufbau des Lagers 1 in seiner bevorzugten Ausführungsform im Längsschnitt. Dieses Lager ist als Fahrwerkslager verwendbar und die Wirkrichtungen des Lagers sind mit den Pfeilen z und y angezeigt. Dabei bedeutet z die Fahrzeughochrichtung und y die Fahrzeugquerrichtung. In der Figur 2 ist das Lager im Schnitt gemäß der Linie A-A der Fig. 1 gezeigt. Durch die Pfeile z, x wird hier auch die Wirkrichtung in Fahrzeuglängsrichtung x sichtbar. Das Lager 1 besteht im Wesentlichen aus dem Lagerkern 2, der äußeren Lagerhülse 3 und den dazwischen angeordneten Tragfedern 4 aus einem elastomeren Material. Die Tragfedern 4 verlaufen in axialer Richtung und trennen die Arbeitskammern 5, 6 und 7, 8 voneinander. Die Arbeitskammern 5, 6 und 7, 8 sind mit Flüssigkeit gefüllt und jeweils über hier nicht näher gezeigte Strömungskanäle in an sich bekannter Weise miteinander verbunden. Über diese Kanäle wird eine Schwingungsdämpfung des Lagers 1 erreicht. Zusätzlich zu diesen Strömungskanälen sind in der Wand des hohlen Lagerkerns 2 die Öffnungen 9 vorgesehen, die durch die Sperrelemente 10 verschließbar sind. Über die Öffnungen 9 kann über eine Art Bypass, der durch den Lagerkern 2 verläuft, eine Verbindung zwischen den Kammern 5, 6 bzw. 7, 8 hergestellt werden. Bei einem Lager mit diesem Aufbau aus vier Arbeitskammern 5 bis 8 und den entsprechenden Bypässen über die Öffnungen 9 in der Wand 11 des Lagerkerns 2 ist es möglich, die Steifigkeiten in X-Richtung und in Z-Richtung anzupassen, indem entsprechende Volumina für die Kammern und auch Strömungsquerschnitte für die Durchflussöffnungen 9 gewählt werden. Die Kräfte in Y-Richtung werden durch Elastomereinsätze 12 zwischen dem Verbindungskopf 13 und dem an der Lagerhülse 3 vorhandenen Ringflansch 14 aufgenommen (siehe Fig. 3). Der Verbindungskopf 13 ist mit einem entsprechenden Anschlussteil 40 versehen. Die bevorzugte Ausführungsform der Erfindung sieht vor, parallel zu den Kammern 5 bis 8 einen weiteren Satz von Arbeitskammern 15 -18 einzusetzen. Dieses kann durch Anfügen der Arbeitskammern 15 - 18 unmittelbar an die Kammern 5 bis 8 erfolgen. Dieses ist in der Figur 1 sichtbar, die Kammern 5 bis 8 werden von den radialen Blähwänden 19 und 20 begrenzt, während die Kammern 15 bis 18 von den Blähwänden 20 und 21 begrenzt sind. Jedem Arbeitskammersatz 5 bis 8 bzw. 15 bis 18 sind gesonderte Sperrelemente 10 bzw. 22 zugeordnet, die verdrehbar, wie mit den Pfeilen 23 angezeigt, sind. Die statische Steifigkeit des Lagers 1 in X- und Z-Richtung wird dadurch erhöht, dass der durch den Kern 2 des Lagers verlaufende Bypass durch das bzw. die Sperrelemente 10, 22 verschlossen wird. Bei einem Federn des Lagers 1 z. B. in X-Richtung setzt sich die Reaktionskraft bei geschlossenem Bypass aus der Reaktionskraft der Elastomertragfeder 4 und der Wirkung des Flüssigkeitsdrucks an den Seitenwänden 19-21 der Kammern 7 und 8 zusammen. Im Resultat wird die statische Steifigkeit erhöht. Die Veränderung der dynamischen Steifigkeit, das heißt der Dämpfung, erfolgt in analoger Art. Durch den Bypass zwischen den Kammern 7 und 8 des Lagers 1, nimmt die Flüssigkeit bevorzugt den im Vergleich zu dem Dämpfungskanal 39 kürzeren Weg durch den Bypass im Lagerkern 2. Der Dämpfungseffekt durch die Flüssigkeit im Strömungskanal 39 geht dadurch verloren bzw. wird zu höheren Frequenzen hin verschoben. Durch die parallele Anordnung von Arbeitskammern 5 bis 8 bzw. 15 bis 18 können den Arbeitskammern unterschiedliche Aufgaben zugeteilt werden, so dass der eine Bereich der Arbeitskammern die Steifigkeitsveränderungen übernimmt und der andere Bereich der Arbeitskammern die Dämpfungscharakteristik liefert. Diese Funktion kann auch jeweils nach Anforderung umgekehrt werden.

In Fig. 3 ist eine weitere vorteilhafte Ausführung des Erfindungsgedankens gezeigt, bei der die parallel angeordneten Arbeitskammern 5 bis 8 bzw. 15 bis 18 durch einzelne nebeneinander angeordnete Bauteile 30 und 31 gebildet werden, die auf einem gemeinsamen Lagerkern 2 aufgeschoben sind und die eine gemeinsame Außenhülse 3 haben. Um eine gute Aufschiebbarkeit der Bauteile 30, 31 auf den Lagerkern 2 zu erreichen, sind die Bauteile 30, 31 mit den Innenhülsen 32, 33 versehen. In der Wand 11 des Lagerkerns sind die Durchflussöffnungen 9 für die Bypässe vorgesehen. Bei der vorliegenden Ausführungsform haben die Arbeitskammern 5 bis 8 und 15 bis 18 unterschiedliche Volumina. Die Arbeitskammern 15 bis 18 haben ein deutlich größeres Volumen als die Arbeitskammern 5 bis 8. Im inneren des Lagerkerns 2 befinden sich zwei verdrehbare Sperrelemente 10, 22, über die die Öffnungen 9 verschlossen werden können. Das Sperrelement 10 besteht aus der drehbeweglichen Stange 34 mit den daran befestigten Schließaufsätzen 35, die den Durchflussöffnungen 9 im Lagerkern 2 zugeordnet sind. Das Sperrelement 22 besteht aus der drehbaren Welle 36 mit einem von einer Bohrung 37 gebildeten Innenraum mit dem sie die Stange 34 umfasst. Sowohl die Stange 34 als auch die Welle 36 werden von nicht näher gezeigten Antrieben getätigt. Diese Antriebe sind im Raum 38 untergebracht, wobei bevorzugt Elektromotoren Verwendung finden.

Die Sperrelemente 10, 22 können mit federnd gelagerten Gleiteinsätzen versehen sein. Die federnde Lagerung der jeweiligen Gleiteinsätze kann durch unterhalb der Gleiteinsätze eingelegte O-Ringe gebildet werden. Außerdem können die Gleiteinsätze eine Beschichtung aus Teflon oder Nylon haben um eine störende Reibung zu vermeiden.

Der Verbindungskopf 13 ist mit dem Flansch 40 ausgestattet und mit dem Elastomereinsatz 12 versehen. Der Elastomereinsatz 12 schließt an den Ringflansch 14 an, der seinerseits an der Lagerhülse 3 zur Anlage kommt.

## Patentansprüche

1. Schaltbares hydraulisches Lager (1), insbesondere Fahrwerkslager, aus einem wenigstens teilweise hohlen Lagerkem, einer äußeren Lagerhülse (2) und einer dazwischen angeordneten Feder (4) aus einem Elastomer sowie in Umfangsrichtung untergebrachten, hydraulischen Arbeitskammern (5, 6; 7, 8), die über einen oder mehrere Strömungskanäle (39) miteinander verbunden sind, **dadurch gekennzeichnet, dass** in Umfangsrichtung des Lagers (1) vier Arbeitskammern (5 - 8) vorgesehen sind, die von der Feder (4) in axialer Richtung getrennt sind und von denen jeweils zwei (5 und 6, sowie 7 und 8) sich gegenüberliegen und über absperrbare Durchftussöffnungen (9) miteinander verbindbar sind, wobei die Durchflussöffnungen (9) in der Wand (11) des Lagerkems (2) und wenigstens ein Sperrelement (10, 22) für die Durchflussöffnungen (9) innerhalb des hohlen Lagerkems (2) angeordnet sind.

2. Lager nach Anspruch 1, **dadurch gekennzeichnet, dass** die Arbeitskammern (5 - 8) unterschiedliche Volumina haben.

3. Lager nach einem der Ansprüche 1 oder 2, **dadurch gekennzeichnet, dass** die Strömungsquerschnitte in den Durchflussöffnungen (9) größer als die Strömungsquerschnitte in den Strömungskanälen (39) sind.

4. Lager nach einem der Ansprüche 1 bis 3, **dadurch gekennzeichnet, dass** das bzw. die Sperrelemente (10, 22) verdrehbar oder axial verschiebbar ist bzw. sind.

5. Lager nach einem der Ansprüche 1 bis 4, **dadurch gekennzeichnet, dass** das bzw. die Sperrelemente (10, 22) über Aktuatoren betätigt werden.

6. Lager nach einem der Ansprüche 1 bis 5, **dadurch gekennzeichnet, dass** der bzw. die Aktuatoren aus Elektromagneten oder Elektromotoren bestehen.

7. Lager nach einem der Ansprüche 1 bis 6, **dadurch gekennzeichnet, dass** parallel zu den Arbeitskammern (5 - 8) ein weiterer Satz Arbeitskammern (15 - 18) vorhanden ist.

8. Lager nach einem der Ansprüche 1 bis 7, **dadurch gekennzeichnet, dass** die Arbeitskammern (5 - 8 und 15 - 18) von radial ausgerichteten Wänden (19, 20, 21) aus elastomerem Material seitlich eingefasst sind.

9. Lager nach einem der Ansprüche 1 bis 8, **dadurch gekennzeichnet, dass** die parallel zueinander angeordneten Arbeitskammern (5 - 8, 15 - 18) durch einzelne nebeneinander angeordnete Bauteile (30, 31) gebildet sind.

10. Lager nach einem der Ansprüche 1 bis 9, **dadurch gekennzeichnet, dass** die Bauteile (30, 31) mit auf den Lagerkern (2) aufschiebbaren Innenhülsen (32, 33) versehen sind.

11. Lager nach einem der Ansprüche 1 bis 10, **dadurch gekennzeichnet, dass** die einzelnen Bauteile (30, 31) unterschiedlich große Arbeitskammern (5 - 8 und 15 - 18) haben.

12. Lager nach einem der Ansprüche 1 bis 11, **dadurch gekennzeichnet, dass** zwei unabhängig voneinander betätigbare Sperrelemente (10, 22) vorgesehen sind.

13. Lager nach einem der Ansprüche 1 bis 12, **dadurch gekennzeichnet, dass** das Sperrelement (10) aus einer drehbeweglich oder axial verschiebbaren Stange (34) mit daran befestigten Verschließaufsätzen (35) besteht, die mit den Durchflussöffnungen (9) im Lagerkern zugeordnet sind.

14. Lager nach einem der Ansprüche 1 bis 13, **dadurch gekennzeichnet, dass** das Sperrelement (22) aus einer drehbeweglich oder axial verschiebbaren Welle (36) mit einem hohlen Innenraum (37) besteht.

15. Lager nach einem der Ansprüche 1 bis 14, **dadurch gekennzeichnet, dass** die Sperrelemente (10, 22) mit federnd gelagerten Gleiteinsätzen versehen sind.

16. Lager nach einem der Ansprüche 1 bis 17, **dadurch gekennzeichnet, dass** die federnde Lagerung der Gleiteinsätze durch unterhalb des jeweiligen Gleiteinsatzes eingelegte O-Ringe gebildet ist.

17. Lager nach einem der Ansprüche 15 oder 16, **dadurch gekennzeichnet, dass** die Gleiteinsätze eine Beschichtung aus Teflon oder Nylon aufweisen.

18. Lager nach einem der Ansprüche 1 bis 17 **dadurch gekennzeichnet, dass** das Lager (1) einen in axialer Richtung des Lagers (1) angeordneten und mit dem Lagerkern (2) gekoppelten Verbindungskopf (13) mit umlaufendem Flansch (40) hat.

19. Lager nach einem der Ansprüche 1 bis 18, **dadurch gekennzeichnet, dass** zwischen dem Flansch (40) des Verbindungskopfes (13) und einem an der Lagerhülse (3) anliegenden Ringflansch (14) ein Elastomereinsatz (12) angebracht ist.

20. Lager nach einem der Ansprüche 1 bis 19, **dadurch gekennzeichnet, dass** der Elastomereinsatz (12) mit Versteifungseinlagen (41) versehen ist.

## Claims

1. Switchable hydraulic mount (1), in particular chassis mount, composed of an at least partially hollow mount core, an external mount sleeve (2) and spring (4) which is arranged between the latter and composed of an elastomer, and hydraulic working chambers (5, 6; 7, 8) which are accommodated in the circumferential direction and are connected to one another via one or more flow ducts (39), **characterized in that** four working chambers (5 - 8) are provided in the circumferential direction of the mount (1), said working chambers (5 - 8) being separated from the spring (4) in the axial direction, and two of said working chambers (5 and 6, and 7 and 8), respectively, lying opposite one another and being capable of being connected to one another via throughflow openings (9) which can be shut off, wherein the throughflow openings (9) are arranged in the wall (11) of the mount core (2), and at least one shutoff element (10, 22) for the throughflow openings (9) is arranged within the hollow mount core (2).

2. Mount according to Claim 1, **characterized in that** the working chambers (5 - 8) have different volumes.

3. Mount according to one of Claims 1 or 2, **characterized in that** the flow cross sections in the throughflow openings (9) are greater than the flow cross sections in the flow ducts (39).

4. Mount according to one of Claims 1 to 3, **characterized in that** the shutoff element or elements (10, 22) can be rotated or displaced axially.

5. Mount according to one of Claims 1 to 4, **characterized in that** the shutoff element or elements (10, 22) are activated by means of actuators.

6. Mount according to one of Claims 1 to 5, **characterized in that** the actuator or actuators are composed of electromagnets or electromotors.

7. Mount according to one of Claims 1 to 6, **characterized in that** a further set of working chambers (15 - 18) is provided parallel to the working chambers (5 - 8).

8. Mount according to one of Claims 1 to 7, **characterized in that** the working chambers (5 - 8 and 15 - 18) are edged laterally by radially oriented walls (19, 20, 21) made of elastomer material.

9. Mount according to one of Claims 1 to 8, **characterized in that** the working chambers (5 - 8, 15-18) which are arranged parallel to one another are formed by individual components (30, 31) which are arranged one next to the other.

10. Mount according to one of Claims 1 to 9, **characterized in that** the components (30, 31) are provided with inner sleeves (32, 33) which can be fitted onto the mount core (2).

11. Mount according to one of Claims 1 to 10, **characterized in that** the individual components (30, 31) have working chambers (5 - 8 and 15 - 18) of different sizes.

12. Mount according to one of Claims 1 to 11, **characterized in that** two shutoff elements (10, 22) which can be activated independently of one another are provided.

13. Mount according to one of Claims 1 to 12, **characterized in that** the shutoff element (10) is composed of a rod (34) which is rotatable or axially displaceable and has closing fittings (35) which are attached thereto and are assigned to the throughflow openings (9) in the mount core.

14. Mount according to one of Claims 1 to 13, **characterized in that** the shutoff element (22) is composed of a rotatable or axially displaceable shaft (36) which has a hollow interior (37).

15. Mount according to one of Claims 1 to 14, **characterized in that** the shutoff elements (10, 22) are provided with spring-mounted sliding inserts.

16. Mount according to one of Claims 1 to 17, **characterized in that** the sprung mount of the sliding inserts is formed by 0-rings which are inserted underneath the respective sliding insert.

17. Mount according to one of Claims 15 or 16, **characterized in that** the sliding inserts have a coating of Teflon or Nylon.

18. Mount according to one of Claims 1 to 17, **characterized in that** the mount (1) has a connecting head (13) which is arranged in the axial direction of the mount (1), is coupled to the mount core (2) and has a circumferential flange (40).

19. Mount according to one of Claims 1 to 18, **characterized in that** an elastomer insert (12) is provided between the flange (40) of the connecting head (13) and an annular flange (14) which bears against the mount sleeve (3).

20. Mount according to one of Claims 1 to 19, **characterized in that** the elastomer insert (12) is provided with reinforcement inlays (41).

## Revendications

1. Palier hydraulique commutable (1), en particulier palier de châssis constitué d'un noyau de palier au moins en partie creux, d'une douille de palier extérieure (2) et d'un ressort (4) disposé entre eux constitué d'un élastomère ainsi que de chambres de travail hydrauliques (5, 6 ; 7, 8) montées dans la direction périphérique qui sont connectées les unes aux autres par le biais d'un ou de plusieurs canaux d'écoulement (39), **caractérisé en ce que** quatre chambres de travail (5-8) sont prévues dans la direction périphérique du palier (1), lesquelles sont séparées par le ressort (4) dans la direction axiale et dont à chaque fois deux (5 et 6, ainsi que 7 et 8) sont en regard l'une de l'autre et peuvent être connectées les unes aux autres par le biais d'ouvertures de passage (9) pouvant être bloquées, les ouvertures de passage (9) étant disposées dans la paroi (11) du noyau de palier (2) et au moins un élément de blocage (10, 22) pour les ouvertures de passage (9) étant disposé à l'intérieur du noyau de palier creux (2).

2. Palier selon la revendication 1, **caractérisé en ce que** les chambres de travail (5-8) ont des volumes différents.

3. Palier selon l'une quelconque des revendications 1 ou 2, **caractérisé en ce que** les sections transversales d'écoulement dans les ouvertures de passage (9) sont plus grandes que les sections transversales d'écoulement dans les canaux d'écoulement (39).

4. Palier selon l'une quelconque des revendications 1 à 3, **caractérisé en ce que** le ou les élément(s) de blocage (10, 22) est ou sont rotatif(s) ou déplaçable(s) axialement.

5. Palier selon l'une quelconque des revendications 1 à 4, **caractérisé en ce que** le ou les élément(s) de blocage (10, 22) est/sont actionné(s) par le biais d'actionneurs.

6. Palier selon l'une quelconque des revendications 1 à 5, **caractérisé en ce que** le ou les actionneur(s) se compose(nt) d'électroaimants ou de moteurs électriques.

7. Palier selon l'une quelconque des revendications 1 à 6, **caractérisé en ce qu'**un autre jeu de chambres de travail (15-18) est prévu parallèlement aux chambres de travail (5-8).

8. Palier selon l'une quelconque des revendications 1 à 7, **caractérisé en ce que** les chambres de travail (5-8 et 15-18) sont entourées latéralement par des parois orientées radialement (19, 20, 21) en matériau élastomère.

9. Palier selon l'une quelconque des revendications 1 à 8, **caractérisé en ce que** les chambres de travail disposées parallèlement les unes aux autres (5-8, 15-18) sont formées par des composants individuels (30, 31) disposés les uns à côté des autres.

10. Palier selon l'une quelconque des revendications 1 à 9, **caractérisé en ce que** les composants (30, 31) sont pourvus de douilles internes (32, 33) pouvant être poussées sur le noyau de palier (2).

11. Palier selon l'une quelconque des revendications 1 à 10, **caractérisé en ce que** les composants individuels (30, 31) ont des chambres de travail (5-8 et 15-18) de tailles différentes.

12. Palier selon l'une quelconque des revendications 1 à 11, **caractérisé en ce qu'**il est prévu deux éléments de blocage (10, 22) pouvant être actionnés indépendamment l'un de l'autre.

13. Palier selon l'une quelconque des revendications 1 à 12, **caractérisé en ce que** l'élément de blocage (10) se compose d'une tige (34) déplaçable en rotation ou axialement, avec des éléments de fermeture (35) fixés sur celle-ci, lesquels sont associés aux ouvertures de passage (9) dans le noyau de palier.

14. Palier selon l'une quelconque des revendications 1 à 13, **caractérisé en ce que** l'élément de blocage (22) se compose d'un arbre (36) déplaçable en rotation ou axialement avec une cavité interne (37).

15. Palier selon l'une quelconque des revendications 1 à 14, **caractérisé en ce que** les éléments de blocage (10, 22) sont pourvus d'inserts de glissement montés à ressort.

16. Palier selon l'une quelconque des revendications 1 à 17, **caractérisé en ce que** le support sur palier à ressort des inserts de glissement est formé par des joints toriques introduits en-dessous de l'insert de glissement respectif.

17. Palier selon l'une quelconque des revendications 15 ou 16, **caractérisé en ce que** les inserts de glissement présentent un revêtement en téflon ou en nylon.

18. Palier selon l'une quelconque des revendications 1 à 17, **caractérisé en ce que** le palier (1) présente une tête de liaison (13) avec une bride périphérique (40) disposée dans la direction axiale du palier (1) et accouplée au noyau de palier (2).

19. Palier selon l'une quelconque des revendications 1 à 18, **caractérisé en ce qu'**entre la bride (40) de la tête de liaison (13) et une bride annulaire (14) s'appliquant contre la douille de palier (3), est monté un insert en élastomère (12).

20. Palier selon l'une quelconque des revendications 1 à 19, **caractérisé en ce que** l'insert en élastomère (12) est pourvu d'éléments de renforcement incorporés (41).
